(19) Europäisches Patentamt
European Patent Office
Office européen des brevets

(11) **EP 4 580 265 A1**

(12) **EUROPEAN PATENT APPLICATION**
published in accordance with Art. 153(4) EPC

(43) Date of publication:
**02.07.2025 Bulletin 2025/27**

(21) Application number: **22956135.2**

(22) Date of filing: **26.08.2022**

(51) International Patent Classification (IPC):
**H04W 52/04** (2009.01)

(52) Cooperative Patent Classification (CPC):
**H04W 52/146; H04W 52/04; H04W 52/14;**
**H04W 52/325; H04W 52/362; H04W 52/48;**
**H04W 52/50; H04W 74/0833;** H04W 74/006

(86) International application number:
**PCT/CN2022/115211**

(87) International publication number:
**WO 2024/040590 (29.02.2024 Gazette 2024/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **GUANGDONG OPPO MOBILE**
**TELECOMMUNICATIONS**
**CORP., LTD.**
**Dongguan, Guangdong 523860 (CN)**

(72) Inventor: **HE, Chuanfeng**
**Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD, TERMINAL DEVICE, AND NETWORK DEVICE**

(57)    A wireless communication method, a terminal device, and a network device are provided in embodiments of the present application. A PUSCH transmitting power may be determined more reasonably in a random access process in a scenario of PRACH repetitions, thereby improving transmission performance of a PUSCH in the random access process. The wireless communication method includes: determining, by a terminal device, a PUSCH transmitting power in a random access process according to first information; where the first information is at least one of: the number of PRACH repetitions, a PRACH transmitting power of the PRACH repetitions, the number of times that the PRACH repetition processes are performed, information indicated in a RAR, or a power offset parameter related to the PRACH repetitions.

**200**

Terminal device determines a PUSCH transmitting power in a random access process according to first information; where the first information is at least one of: the number of PRACH repetitions, the PRACH transmitting power of the PRACH repetitions, the number of times that PRACH repetition processes are performed, information indicated in an RAR, or a power offset parameter related to the PRACH repetitions

S210

FIG. 3

EP 4 580 265 A1

**Description**

TECHNICAL FIELD

Embodiments of the present application relate to the field of communications, and more specifically, to a wireless communication method, a terminal device, and a network device.

BACKGROUND

In a new radio (NR) system, in order to improve coverage performance of a physical random access channel (PRACH), PRACH repetitions are introduced. Specifically, the PRACH repetitions correspond to the same random access response (RAR) receiving window, and a network may perform a combined reception on the PRACH repetitions, to improve detection performance, thereby improving the coverage of the PRACH. However, in a scenario of the PRACH repetitions, how to determine a physical uplink shared channel (PUSCH) transmitting power in a random access process is a problem that needs to be solved.

SUMMARY

The embodiments of the present application provide a wireless communication method, a terminal device, and a network device. The PUSCH transmitting power may be determined more reasonably in the random access process in the PRACH repetition scenario, thereby improving the transmission performance of the PUSCH in the random access process.

In a first aspect, a wireless communication method is provided, and the method includes:

determining, by a terminal device, a PUSCH transmitting power in a random access process according to first information;
where the first information is at least one of:
the number of PRACH repetitions, a PRACH transmitting power of the PRACH repetitions, the number of times that the PRACH repetition processes are performed, information indicated in a RAR, or a power offset parameter related to the PRACH repetitions.

In a second aspect, a wireless communication method is provided, and the method includes:

transmitting, by a network device, second information, where the second information is used to determine a PUSCH transmitting power in a random access process;
where the second information is at least one of: a correspondence between the number of PRACH repetitions and a power adjustment amount, a correspondence between an increment of the number of PRACH repetitions and a power adjustment amount, a correspondence between a power adjustment amount, and the number of PRACH repetitions and the PRACH transmitting power, a correspondence between the number of times that the PRACH repetition processes are performed and a power adjustment amount, a RAR, or a power offset parameter related to the PRACH repetitions.

In a third aspect, a terminal device is provided for performing the method in the first aspect.
Specifically, the terminal device includes a functional module for performing the method in the above first aspect.
In a fourth aspect, a network device is provided for performing the method in the second aspect.
Specifically, the network device includes a functional module for performing the method in the above second aspect.
In a fifth aspect, a terminal device is provided, including a processor and a memory; where the memory is configured to store a computer program, and the processor is configured to call the computer program stored in the memory and run the computer program, to cause the terminal device to perform the method in the above first aspect.
In a sixth aspect, a network device is provided, including a processor and a memory; where the memory is configured to store a computer program, and the processor is configured to call the computer program stored in the memory and run the computer program, to cause the network device to perform the method in the above second aspect.
In a seventh aspect, an apparatus is provided for implementing the method in any one of the first aspect to the second aspect above.
Specifically, the apparatus includes: a processor, configured to call a computer program from a memory and run the computer program, to cause a device equipped with the apparatus to perform the method in any one of the first aspect to the second aspect above.

In an eighth aspect, a computer-readable storage medium is provided for storing a computer program, where the computer program causes a computer to perform the method in any one of the first aspect to the second aspect above.

In a ninth aspect, a computer program product is provided, including computer program instructions, and the computer program instructions cause a computer to perform the method in any one of the first aspect to the second aspect above.

In a tenth aspect, a computer program is provided, where the computer program, when executed on a computer, causes the computer to perform the method in any one of the first aspect to the second aspect above.

Through the technical solution of the first aspect above, the terminal device may determine the PUSCH transmitting power in the random access process according to at least one of the number of PRACH repetitions, the PRACH transmitting power of the PRACH repetitions, the number of times that the PRACH repetition processes are performed, the information indicated in the RAR, or the power offset parameter related to the PRACH repetitions, so that the PUSCH transmitting power in the random access process may be determined more reasonably, thereby improving transmission performance of a PUSCH in the random access process.

Through the technical solution of the second aspect above, the network device may transmit at least one of the correspondence between the number of PRACH repetitions and the power adjustment amount, the correspondence between the increment of the number of PRACH repetitions and the power adjustment amount, the correspondence between the power adjustment amount, and the number of PRACH repetitions and the PRACH transmitting power, the correspondence between the number of times that the PRACH repetition processes are performed and the power adjustment amount, the RAR, or the power offset parameter related to the PRACH repetitions, so that the terminal device may determine the PUSCH transmitting power in the random access process based on the content transmitted by the network device, and may more reasonably determine the PUSCH transmitting power in the random access process, thereby improving the transmission performance of the PUSCH in the random access process.

## BRIEF DESCRIPTION OF THE DRAWINGS

FIG. 1 is a schematic diagram of a communication system architecture applied in embodiments of the present application.

FIG. 2 is a schematic diagram of PRACH repetitions provided in the present application.

FIG. 3 is a schematic flowchart of a wireless communication method provided according to embodiments of the present application.

FIG. 4 is a schematic diagram of a PRACH repetition process provided according to embodiments of the present application.

FIG. 5 is a schematic flowchart of another wireless communication method provided according to embodiments of the present application.

FIG. 6 is a schematic block diagram of a terminal device provided according to embodiments of the present application.

FIG. 7 is a schematic block diagram of a network device provided according to embodiments of the present application.

FIG. 8 is a schematic block diagram of a communication device provided according to embodiments of the present application.

FIG. 9 is a schematic block diagram of an apparatus provided according to embodiments of the present application.

FIG. 10 is a schematic block diagram of a communication system provided according to embodiments of the present application.

## DETAILED DESCRIPTION

Technical solutions of the embodiments of the present application will be described below in conjunction with the drawings in the embodiments of the present application. Obviously, the described embodiments are only some but ont all of embodiments of the present application. For the embodiments in the present application, all other embodiments obtained by those skilled in the art without creative effort fall within the protection scope of the present application.

The technical solutions of the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, a NR system evolution system, a LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), Internet of Things (IoT), wireless fidelity (WiFi), a fifth-generation communication (5th-Generation, 5G) system, a sixth-generation communication (6th-Generation, 6G) system or other communication systems.

Generally speaking, a limited number of connections are supported by traditional communication systems which are easy to be implemented. However, with development of communication technology, mobile communication systems will support not only traditional communications, but also, for example, device to device (D2D) communication, machine to machine (M2M) communication, machine type communication (MTC), vehicle to vehicle (V2V) communication, sidelink (SL) communication, vehicle to everything (V2X) communication. The embodiments of the present application may also be applied to these communication systems.

In some embodiments, the communication system in the embodiments of the present application may be applied to a carrier aggregation (CA) scenario, a dual connectivity (DC) scenario, a standalone (SA) network deployment scenario, or a non-standalone (NSA) network deployment scenario.

In some embodiments, the communication system in the embodiments of the present application may be applied to an unlicensed spectrum, where the unlicensed spectrum may also be considered as a shared spectrum; or, the communication system in the embodiments of the present application may also be applied to a licensed spectrum, where the licensed spectrum may also be considered as an unshared spectrum.

In some embodiments, the communication system in the embodiments of the present application may be applied to a frequency band of FR1 (corresponding to a frequency band range of 410 MHz to 7.125 GHz), may also be applied to a frequency band of FR2 (corresponding to a frequency band range of 24.25 GHz to 52.6 GHz), and may also be applied to new frequency bands, such as, high-frequency frequency bands corresponding to a frequency band range of 52.6 GHz to 71 GHz or a frequency band range of 71 GHz to 114.25 GHz.

In the embodiments of the present application, each embodiments will be described in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, an in-vehicle device, a wearable device, a terminal device in a next-generation communication system (e.g.,an NR network), a terminal device in a future evolved public land mobile network (PLMN) network, or the like.

In the embodiments of the present application, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an in-vehicle communication device, a wireless communication chip/application specific integrated circuit (ASIC)/system on chip (SoC), etc.

By way of example but not limitation, in the embodiments of the present application, the terminal device may also be a wearable device. The wearable device may also be referred to as a wearable smart device, which is a general term for wearable devices developed by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also implements powerful functions through software supporting as well as data interaction or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device for communicating with a mobile device. The network device may be an access point (AP) in WLAN, a base station (Base Transceiver Station, BTS) in GSM or CDMA, a base station (NodeB, NB) in WCDMA, an evolved base station (Evolutional NodeB, eNB or eNodeB) in LTE, a relay station or an access point, an in-vehicle device, a wearable device, a network device or a station (gNB) or a transmission reception point (TRP) in the NR network, or a network device in the future evolved PLMN network, or a network device in the NTN network, etc.

By way of example but not limitation, in the embodiments of the present application, the network device may have a mobile characteristic. For example, the network device may be mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may also be a base station set up on land, water, or other places.

In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include: a metro cell, a micro cell, a pico cell, a femto cell, etc. These small cells have characteristics of small coverage range and low transmitting power, which are applicable for providing data transmission services with high-speed.

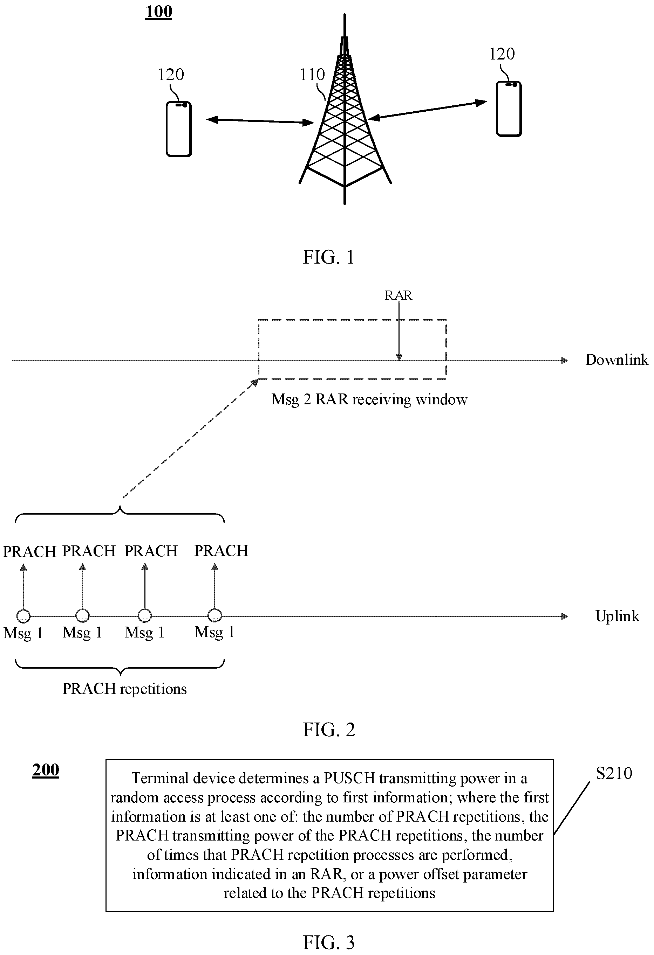

For example, a communication system 100 applied in the embodiments of the present application is shown in FIG. 1. The communication system 100 may include a network device 110, and the network device 110 may be a device for communicating with a terminal device 120 (or referred to as a communication terminal or terminal). The network device 110 may provide communication coverage for a specific geographical area and may communicate with terminal devices located within the coverage area.

FIG. 1 exemplarily shows one network device and two terminal devices. In some embodiments, the communication system 100 may include multiple network devices, and coverage range of each network device may be provided therein with other number of terminal devices, which are not limited in the embodiments of the present application.

In some embodiments, the communication system 100 may further include other network entities such as a network controller, a mobility management entity, which are not limited in the embodiments of the present application.

It should be understood that a device in a network/system having a communication function in the embodiments of the present application may be referred to as a communication device. Taking the communication system 100 shown in FIG. 1 as an example, the communication device may include the network device 110 and the terminal device 120 with the communication function. The network device 110 and the terminal device 120 may be the specific devices described above, which will not be repeated here. The communication device may further include other devices in the communication system 100, such as a network controller, a mobility management entity and other network entities, which are not limited in the embodiments of the present application.

It should be understood that, the terms "system" and "network" are often used interchangeably herein. The term "and/or" herein is used to describe an association relationship between associated objects, for example, to indicate that there may be three relationships between the related objects. For example, "A and/or B" may represent that: A exists alone, both A and B exist, and B exists alone. In addition, the character "/" herein generally indicates that related objects before and after this character are in an "or" relationship.

It should be understood that, a first communication device and a second communication device are involved in the present application. The first communication device may be a terminal device, such as a mobile phone, a machine facility, a customer premise equipment (CPE), an industrial device, a vehicle. The second communication device may be a peer communication device of the first communication device, such as a network device, a mobile phone, an industrial device, a vehicle. In the embodiments of the present application, the first communication device may be a terminal device, and the second communication device may be a network device (i.e., uplink communication or downlink communication); or, the first communication device may be a first terminal, and the second communication device may be a second terminal (i.e., sideline communication).

The terms used in the section of detailed description of the present application are only used to explain the specific embodiments of the present application and are not intended to limit the present application. The terms "first", "second", "third" and "fourth" or the like in the specification, claims and drawings of the present application are used to distinguish different objects rather than to describe a specific sequence. In addition, the terms "include", and "have" and any variations thereof are intended to cover a non-exclusive inclusion.

It should be understood that, "indicate" mentioned in the embodiments of the present application may mean a direct indication or an indirect indication, or represent that there is an association relationship. For example, A indicating B may mean that A directly indicates B, e.g., B may be obtained through A; or it may mean that A indirectly indicates B, e.g., A indicates C, and B may be obtained through C; or it may mean that there is an association relationship between A and B.

In the embodiments of the present application, the term "correspond" may mean that there is a direct correspondence or indirect correspondence between the two, or it may mean that there is an association relationship between the two, or it may mean that a relationship of indicating and being indicated, or configuring and being configured, or the like.

In the embodiments of the present application, "predefine" or "preconfigure" may be achieved by pre-storing corresponding codes, tables or other means that may be used to indicate relevant information in a device (for example, including a terminal device and a network device). The present application does not limit its specific implementation thereof. For example, predefined may refer to that defined in a protocol.

In the embodiments of the present application, the "protocol" may refer to a standard protocol in the field of communication, for example, it may be an evolution of an existing LTE protocol, NR protocol, Wi-Fi protocol, or protocols related to other communication systems, which is not limited in the present application.

To facilitate understanding of the technical solutions of the embodiments of the present application, the technical solutions of the present application are described in detail below through specific embodiments. The following related technologies, as optional solutions, may be arbitrarily combined with the technical solutions of the embodiments of the present application, and they all belong to the protection scope of the embodiments of the present application. The embodiments of the present application include at least part of following contents.

In order to better understand the embodiments of the present application, a PRACH in a random access process related to the present application is described.

Random access channel (RACH) resources configured for accessing UEs are defined in the NR, including 256 configurations. RACH resource configuration information used by a cell is indicated to an accessing UE in a system message. Each RACH resource configuration includes: a preamble format, a period, a radio frame offset, a subframe number within a radio frame, a starting symbol within a subframe, the number of PRACH slots within the subframe, the number of PRACH occassions within a PRACH slot, and a duration of a PRACH occassion. Through the indicated information, the time, frequency and code information of the PRACH resource may be determined.

Based on the RACH resource configuration indicated by the system message, an association relationship between a synchronization signal block (SSB) and the PRACH resource is also indicated, so that the UE may determine PRACH resources it may use, including the PRACH occassion and preamble, based on the detected SSB and the association relationship. The UE determines a SSB that meets a threshold value of reference signal received power (RSRP) through ameasurement results of the SSB, and uses a PRACH resource associated with the SSB to transmit the preamble.

It should be noted that the SSB may also be referred to as a synchronization signal/physical broadcast channel block (SS/PBCH block).

During a random access process, the UE transmits the preamble mainly to inform a network that there is a random access request. After transmitting the preamble, the UE will monitor a physical downlink control channel (PDCCH) within a RAR time window to receive a RAR corresponding to a random access radio network temporary identity (RA-RNTI). The UE detecta the RAR after transmitting the preamble each time. In a case where the RAR responded by the network does not received within the RAR time window, the UE will transmit the preamble again on a next available PRACH resource, and a transmitting power of the preamble will be lifted by one step. The network will configure a maximum number of times the preamble may be transmitted. In a case where the number of times the preamble is transmitted reaches the maximum number of times the preamble may be transmitted and the UE still does not receive the RAR, the random access process fails.

In order to better understand the embodiments of the present application, PRACH repetitions (repetition) related to the present application are described.

During the random access process, after transmiting a PRACH, a UE receives a RAR transmitted by a network in a RAR receiving window. In a case where the UE does not receive the RAR, it will retransmit the PRACH on the next available PRACH resource and the PRACH power will be lifted by one step.

However, in a case of coverage constraints, the UE cannot increase the PRACH power indefinitely to make the network to detect it. In order to improve the coverage performance of the PRACH, the PRACH repetitions are introduced in the NR evolution. As shown in FIG. 2, PRACH repetitions (transmitting 4 random access message 1 (message 1, Msg 1)) correspond to the same RAR receiving window (random access message 2 (message 2, Msg 2)). The network may perform combined reception on PRACH repetitions to improve the detection performance, thereby improving the coverage of the PRACH.

In order to better understand the embodiments of the present application, power control of PRACH related to the present application is described.

The power control of PRACH adopts an open-loop power control mechanism. The UE sets a of PRACH transmitting power based on factors such as an expected receive power configured by the network and a path loss measured by a downlink reference signal. During the random access process, in a case where the UE transmits a PRACH but does not receive a RAR from the network or does not successfully receive a conflict resolution message, the UE needs to restransmit the PRACH. In a case where the UE supports multiple transmit beams in NR, and the transmit beam remains unchanged, the retransmitted PRACH transmitting power is lifted based on the last transmitted PRACH power until the random access process is successfully completed.

In some embodiments, the power control of the PRACH is determined by the following formula 1:

$$P_{PRACH,b,f,c}(i) = \min\left\{P_{CMAX,f,c}(i), P_{PRACH,target,f,c} + PL_{b,f,c}\right\} \text{[dBm]} \qquad \text{formula 1}$$

$P_{PRACH,target,f,c}$ denotes a target received power (*PREAMBLE_RECEIVED_TARGET_POWER*) of the PRACH determined by a media access control (MAC) layer; $PL_{b,f,c}$ denotes a path loss measured by the UE on a carrier *f* for an activated uplink BWP b based on a downlink reference signal (RS) associated with the PRACH transmission in an activated downlink bandwidth part (BWP) of a serving cell c; a power calculated by $P_{PRACH,target,f,c}$ and $PL_{b,f,c}$ is a power determined according to open-loop power control; $P_{CMAX,f,c}(i)$ is the maximum output power of the UE at a transmission occassion $i$ in the serving cell c on the carrier $f$. Specifically, *PREAMBLE_RECEIVED_TARGET_POWER = preambleReceivedTargetPower + DELTA_PREAMBLE + (PREAMBLE_POWER_RAMPING_COUNTER-1) × PREAMBLE_-POWER_RAMPING_STEP + POWER_OFFSET_2STEP_RA*; where *preambleReceivedTargetPower* is a target received power of the PRACH configured by a high layer.

In some embodiments, a PUSCH (i.e. Msg 3 PUSCH) power transmitted in a message 3 (Msg 3) in the random access process is calculated by the following formula 2:

$$\hat{P}_{PUSCH}(i) = \min\left\{\hat{P}_{CMAX}, P_0 + 10\log_{10}\left(\tilde{M}(i)\right) + \alpha \cdot PL + \Delta_{TF}(i) + f(i)\right\} \qquad \text{formula 2}$$

$P_{CMAX}$ is the maximum transmitting power of the UE; $Po = PO_{\_PRE} + \Delta_{PREAMBLE\_Msg3}$, $P_{O\_PRE}$ is a target received power of Preamble, $\Delta_{PREAMBLE\_Msg3}$ is a power offset parameter of the Msg 3; $M(i)$ is the number of resource blocks (RBs) used by the PUSCH; $PL$ is a path loss measured by the downlink RS associated with the PRACH transmission; $\alpha$ is a path loss compensation factor; $\Delta_{TF}(i)$ is a power offset value of different modulation and coding scheme (MCS) formats relative to a reference MCS format; $f(i)$ is a adjustment amount of the PUSCH transmitting power, and its initial value $f(0)=\Delta P_{rampup} + \delta_{msg2}$, $\Delta P_{rampup}$ is a total lifting amount of the random access preamble transmitting power, and $\delta_{msg2}$ is a value of the transmitting power control (TPC) command carried in the RAR.

Specifically, a initial transmitting power of PRACH is determined according to the target received power configured by the high layer, the measured path loss, and the number of power lifted times and step size of the PRACH. For the UE, a initial power of PRACH may be determined through the open-loop power control, and then the power may be gradually lifted, so that the network may successfully detect the preamble transmitted by the UE. This has the advantage of avoiding transmitting with more power than necessary, which may reduce interference caused by the UE.

The setting of the Msg3 PUSCH transmitting power is related to the power of PRACH. Specifically, based on a result of the PRACH power being lifted, the Msg3 PUSCH transmitting power is determined by a power offset parameter and a TPC command indicated in an RAR. Therefore, in a case where the PRACH transmitting power is gradually lifted during multiple transmissions, the network may successfully detect the preamble transmitted by the UE. The transmitting power of the preamble detected by the network is of reference significance for the Msg3 PUSCHtransmitting power, which may make the power setting of the Msg3 PUSCH more reasonable and improve coverage performance of its transmission.

In order to facilitate a better understanding of the embodiments of the present application, the problems solved by the present application are explained.

PRACH repeatations is to improve the coverage of PRACH. However, the power of Msg 3 PUSCH is set according to a result of a single transmission of PRACH, without considering PRACH repeatations. It is possible that the power of Msg3 PUSCH is unable to achieve a coverage level similar to that of PRACH repeatations, resulting in a decrease in the coverage performance of Msg3 PUSCH.

Based on the above problem, the present application proposes a solution for determining the transmitting power of Msg3 PUSCH. In the scenario of PRACH repeations, the PUSCH transmitting power of in the random access process can be determined more reasonably, thereby improving the transmission performance of PUSCH in the random access process.

The technical solutions of the present application are described in detail below through specific embodiments.

FIG. 3 is a schematic flowchart of a wireless communication method 200 according to the embodiments of the present application. As shown in FIG. 3, the wireless communication method 200 may include at least part of the following contents.

S210, the terminal device determines a PUSCH transmitting power in a random access process according to first information; where the first information is at least one of: the number of PRACH repetitions, the PRACH transmitting power of the PRACH repetitions, the number of times that PRACH repetition processes are performed, information indicated in an RAR, or a power offset parameter related to the PRACH repetitions.

In the embodiments of the present application, the terminal device may determine the PUSCH transmitting power in the random access process based on at least one of the number of PRACH repetitions, the PRACH transmitting power of the PRACH repetitions, the number of times that the PRACH repetition processes are performed, the information indicated in the RAR, or the power offset parameter related to the PRACH repetitions. The PUSCH transmitting power in the random access process may be determined more reasonably, thereby improving the transmission performance of the PUSCH in the random access process.

In some embodiments, the PUSCH in the random access process is a PUSCH transmitted in a Msg3 in a four-step random access process, or the PUSCH in the random access process is a PUSCH transmitted in a MsgB in a two-step random access process.

The following description is made by taking the PUSCH in the random access process as the PUSCH transmitted in the Msg 3 (Msg 3 PUSCH) in the four-step random access process as an example.

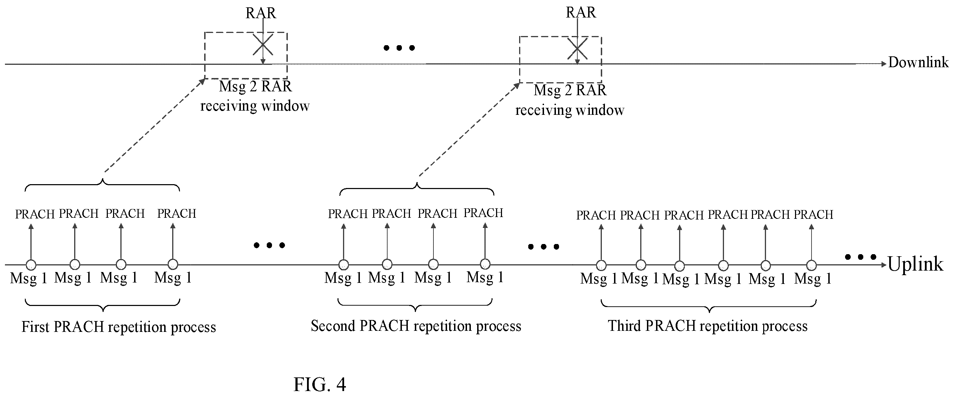

The embodiments of the present application are applied to the scenario of PRACH repetitions. During one PRACH repetition process, the terminal device performs multiple PRACH transmissions. The network may perform a combined reception on multiple PRACH transmissions to achieve reception performance that cannot be achieved by a single PRACH transmission, thereby improving the coverage of PRACH transmission. In other words, the multiple PRACH transmissions in one PRACH repetition process correspond to one RAR receiving window. That is, multiple PRACH transmissions corresponding to one RAR may be referred to as one PRACH repetition process, and one PRACH repetition process includes multiple PRACH transmissions. Specifically, for example, as shown in FIG. 4, the first PRACH repetition process includes 4 PRACH transmissions, the second PRACH repetition process also includes 4 PRACH transmissions, and the third PRACH repetition process includes 6 PRACH transmissions.

It should be noted that, for one PRACH repetition process, since the power of multiple PRACH transmissions may be accumulated received on a network side, the power of one PRACH transmission in one PRACH repetition process does not need to meet the reception of the network side. Especially in a scenario with limited network coverage, even if the transmitting power of a single PRACH transmission is set to the maximum transmitting power of the terminal device, it still cannot be successfully received by the network. That is to say, after the PRACH repetitions are adopted, it is unreasonable that a subsequent Msg3 PUSCH transmitting power takes a power of a certain PRACH transmission in a PRACH repetition process responded by the network as a reference. The successful reception of PRACH is not based on the power of the certain PRACH transmission in the PRACH repetition process, but is a result of the overall combined reception of multiple PRACH transmissions in the PRACH repetition process. In a case where the Msg3 PUSCH transmitting power takes the power of the certain PRACH transmission responded by the network in the PRACH repetition process as a reference, it is possible that the Msg3 PUSCH power cannot reach a coverage level similar to that of the PRACH repetitions, resulting in a decrease in the coverage performance of the Msg3 PUSCH. Based on the embodiments of the present application, in the scenario of PRACH repetitions, the Msg3 PUSCH transmitting power may be determined more reasonably, thereby improving the transmission performance of the Msg3 PUSCH.

The technical solutions of the present application are described in detail below through specific embodiments.

Embodiment 1: the first information is the number of PRACH repetitions, that is, the terminal device determines the PUSCH transmitting power in the random access process according to the number of PRACH repetitions.

It should be noted that PRACH repetitions may achieve better coverage than a single PRACH transmission. Therefore, the number of PRACH transmissions included in one PRACH repetition process may reflect a coverage level of PRACH. In a case where it is not successfully received by the network, it means that the current PRACH repetition process cannot meet a coverage requirement of the current terminal device to reach a base station. One method is to increase the number of PRACH transmissions in the next PRACH repetition process to achieve better coverage. As shown in FIG. 4, the first PRACH repetition process includes 4 PRACH transmissions (the network does not respond), the second PRACH repetition process also includes 4 PRACH transmissions (the network does not respond), and the third PRACH repetition process includes 6 PRACH transmissions. In a case where a PRACH repetition process is successfully received by the network, it means that the PRACH repetition process meets the coverage requirement of the current terminal device to reach the base station. In order to achieve the coverage level similar to that of PRACH, the PUSCH (such as the Msg3 PUSCH) transmitting power in the random access process may refer to the number of PRACH transmissions in the PRACH repetition process responded by the network. As shown in FIG. 4, it is assumed that the third PRACH repetition process is responded by the network, the PUSCH (e.g., Msg3 PUSCH) transmitting power in the random access process may refer to the number of PRACH transmissions, i.e., 6, in the third PRACH repetition process.

Optionally, in Embodiment 1, the terminal device determines the PUSCH transmitting power in the random access process according to the number of PRACH repetitions included in a target PRACH repetition process;

the target PRACH repetition process is one PRACH repetition process respond by the network through the RAR in at least one PRACH repetition process.

For example, as shown in FIG. 4, it is assumed that the third PRACH repetition process is responded by the network, the target PRACH repetition process is the third PRACH repetition process among the three PRACH repetition processes.

Optionally, in Embodiment 1, the terminal device determines an adjustment amount of the PUSCH transmitting power according to the number of PRACH repetitions included in the target PRACH repetition process; and the terminal device determines the PUSCH transmitting power in the random access process according to the adjustment amount of the PUSCH transmitting power.

In some optional implementations of Embodiment 1, determining, by the terminal device, the adjustment amount of the PUSCH transmitting power according to the number of PRACH repetitions included in the target PRACH repetition process includes:

determining, by the terminal device, a power adjustment amount related to the number of PRACH repetitions according to the number of PRACH repetitions included in the target PRACH repetition process; and determining, by the terminal device, the adjustment amount of the PUSCH transmitting power according to the power adjustment amount related to the number of PRACH repetitions.

In some optional implementations, a correspondence between the number of PRACH repetitions and the power adjustment amount is agreed upon by a protocol, or the correspondence between the number of PRACH repetitions and the power adjustment amount is configured by a network device.

In some optional implementations, the correspondence between the number of PRACH repetitions and the power adjustment amount may also be determined based on a preset rule, and the preset rule may be a function, a table, or the like.

Specifically, the parameter $f(i)$ in the above formula 2 is set to $\Delta P_{rep}+\delta_{msg2}$, where the $\Delta P_{rep}$ is a power adjustment amount related to the number of PRACH transmissions included in the PRACH repetition process responded by the network (i.e., the target PRACH repetition process), i.e., $\Delta P_{rep}$ is the power adjustment amount related to the number of PRACH repetitions. For example, in a case where the number of PRACH transmissions included in the PRACH repetition process responded by the network (i.e., the target PRACH retransmission process) is 4, $\Delta P_{rep}=\Delta P_1$; in a case where the number of PRACH transmissions included included in the PRACH repetition process responded by the network (i.e., the target PRACH repetition process) is 6, $\Delta P_{rep}=\Delta P_2$.

In some optional implementations of Embodiment 1, determining, by the terminal device, the adjustment amount of the PUSCH transmitting power according to the number of PRACH repetitions included in the target PRACH repetition process includes:

determining, by the terminal device, a power adjustment amount related to an increment of the number of PRACH repetitions according to an increment of the number of PRACH repetitions included in the target PRACH repetition process compared to the number of PRACH repetitions included in the first PRACH repetition process; and determining, by the terminal device, the adjustment amount of the PUSCH transmitting power according to the power adjustment amount related to the increment of the number of PRACH repetitions.

In some optional implementations, a correspondence between the increment of the number of PRACH repetitions and the power adjustment amount is agreed upon by the protocol, or the correspondence between the increment of the number of PRACH repetitions and the power adjustment amount is configured by the network device.

In some optional implementations, the correspondence between the increment of the number of PRACH repetitions and the power adjustment amount may also be determined based on the preset rule, and the preset rule may be a function, a table, or the like.

Specifically, the parameter $f(i)$ in the above formula 2 is set to $\Delta Prep+\delta msg2$, where $\Delta P_{rep}$ is a power adjustment amount related to an increment of the number of PRACH transmissions included in the PRACH repetition process responded by the network (i.e., the target PRACH repetition process) compared to the number of PRACH repetitions included in the first PRACH repetition process. For example, as shown in FIG. 4, the number of PRACH repetitions included in the PRACH repetition process responded by the network is 6, and the increment compared to the number of PRACH repetitions included in the first PRACH repetition process (i.e., 4) is 2, $\Delta P_{rep}$ is a power adjustment amount related to the increment of 2 in the number of PRACH repetitions.

Embodiment 2: the first information is the PRACH transmitting power of the PRACH repetitions, that is, the terminal device determines the PUSCH transmitting power in the random access process according to the PRACH transmitting power of the PRACH repetitions.

It should be noted that, after the terminal device performs one PRACH repetition process and does not receive the RAR from the network, it will perform the PRACH repetition process again. In the next PRACH repetition process, in addition to increasing the number of PRACH transmissions, the PRACH transmitting power of the PRACH transmission may also be increased to improve the coverage of the PRACH. When calculating the power of the Msg3 PUSCH, the PRACH transmitting power in the PRACH repetition process responded by the network may be referred to, or a total lifting amount of PRACH power in multiple PRACH repetitions may be referred to.

In some optional implementations, PRACH transmitting powers of different PRACH repetitions in one PRACH repetition process are the same. For example, in one PRACH repetition process, the PRACH transmitting power remains unchanged, and in the next PRACH repetition process, the PRACH transmitting power is increased by one step compared to the PRACH transmitting power in the previous PRACH repetition process.

In some optional implementations of Embodiment 2, the terminal device determines the PUSCH transmitting power in the random access process according to a PRACH transmitting power in a target PRACH repetition process; where the target PRACH repetition process is one PRACH repetition process respond by the network through a RAR in at least one PRACH repetition process. PRACH transmitting powers of different PRACH repetitions in one PRACH repetition process are the same.

In some optional implementations of Embodiment 2, the terminal device determines the PUSCH transmitting power in the random access process according to a lifting amount of the PRACH transmitting power in the target PRACH repetition process compared to a PRACH transmitting power in a first PRACH repetition process; where the target PRACH repetition process is one PRACH repetition process respond by the network through a RAR in at least one PRACH repetition process. PRACH transmitting powers of different PRACH repetitions in one PRACH repetition process are the same.

Specifically, in Embodiment 2, it is assumed that the PRACH transmitting power remains unchanged in one PRACH repetition process, the PRACH transmitting power in the next PRACH repetition process is increased by one step compared to the PRACH transmitting power in the previous PRACH repetition process. The Msg3 PUSCH transmitting power refers to the PRACH transmitting power in the PRACH repetition process responded by the network, or refers to a total lifting amount of the PRACH transmitting power in multiple PRACH repetition processes. The total lifting amount of the PRACH transmitting power may be a lifting amount of power of one PRACH transmission in the PRACH repetition process responded by the network compared to the power of one PRACH transmission in the first PRACH repetition process of the terminal device.

In some optional implementations, PRACH transmitting powers of different PRACH transmissions in one PRACH repetition process are different. That is, during one PRACH repetition process, the transmitting powers of different PRACH transmissions may be different, for example, power lifting up may be performed.

In some optional implementations of Embodiment 2, the terminal device determines the PUSCH transmitting power in the random access process according to a PRACH transmitting power of a first target PRACH transmission in a target PRACH repetition process; where the target PRACH repetition process is one PRACH repetition process respond by the network through a RAR in at least one PRACH repetition process. PRACH transmitting powers of different PRACH transmissions in one PRACH repetition process are different.

In some implementations, the first target PRACH transmission is a first PRACH transmission or a last PRACH transmission in the target PRACH repetition process. Of course, the first target PRACH transmission may also be other PRACH transmission in the target PRACH repetition process, which is not limited in the present embodiment.

In some optional implementations of Embodiment 2, the terminal device determines the PUSCH transmitting power in the random access process according to a lifting amount of a PRACH transmitting power of a second target PRACH transmission in the target PRACH repetition process compared to a PRACH transmitting power of a third target PRACH transmission in a first PRACH repetition process; where the target PRACH repetition process is one PRACH repetition process respond by the network through a RAR in at least one PRACH repetition process. PRACH transmitting powers of different PRACH transmissions in one PRACH repetition process are different.

In some implementations, the second target PRACH transmission is a first PRACH transmission or a last PRACH transmission in the target PRACH repetition process, and the third target PRACH transmission is a first PRACH transmission or a last PRACH transmission in the first PRACH repetition process. Of course, the second target PRACH transmission may also be other PRACH transmission in the target PRACH repetition process, which is not limited in the present embodiment. The third target PRACH transmission may also be other PRACH transmission in the first PRACH repetition process, which is not limited in the present embodiment.

For example, the second target PRACH transmission is the first PRACH transmission in the target PRACH repetition process, and the third target PRACH transmission is the first PRACH transmission in the first PRACH repetition process.

For another example, the second target PRACH transmission is the last PRACH transmission in the target PRACH repetition process, and the third target PRACH transmission is the last PRACH transmission in the first PRACH repetition process.

For yet another example, the second target PRACH transmission is the first PRACH transmission in the target PRACH repetition process, and the third target PRACH transmission is the last PRACH transmission in the first PRACH repetition process.

For still another example, the second target PRACH transmission is the last PRACH transmission in the target PRACH repetition process, and the third target PRACH transmission is the first PRACH transmission in the first PRACH repetition process.

Specifically, in Embodiment 2, in one PRACH repetition process, the transmitting powers of different PRACH transmissions may be different, for example, may be lifted up. In this case, the Msg3 PUSCH transmitting power refers to a power of a certain PRACH in the PRACH repetition process responded by the network, such as the first PRACH transmission or the last PRACH transmission. Alternatively, the Msg3 PUSCH transmitting power refers to a total lifting amount of PRACH transmitting power in multiple PRACH repetitions. Specifically, the total lifting amount of PRACH transmitting power may be a lifting amount of the power of a certain PRACH transmission in the PRACH repetition process responded by the network compared to the power of a certain PRACH transmission in the first PRACH repetition process of the terminal device, for example, a lifting amount of the power of the first or last PRACH transmission in the PRACH repetition process responded by the network compared to the power of the first or last PRACH transmission in the first PRACH repetition process of the terminal device.

Embodiment 3: the first information is the number of PRACH repetitions and the PRACH transmitting power of the PRACH repetitions, that is, the terminal device determines the PUSCH transmitting power in the random access process according to the number of PRACH repetitions and the PRACH transmitting power of the PRACH repetitions.

It should be noted that, in a case where the terminal device performs a PRACH repetition process and does not receive a RAR of the network, the terminal device performs PRACH repetitions again. The coverage may be improved by increasing the number of PRACH transmissions or increasing the PRACH transmitting power. It is possible to adopt these two methods at the same time, that is, on the basis of increasing the number of PRACH transmissions, the PRACH transmitting power is also increased. That is to say, the coverage level of PRACH is achieved by increasing the number of PRACH repetitions and lifting the PRACH transmitting power.

In some optional implementations of Embodiment 3, the terminal device determines the PUSCH transmitting power in the random access process according to the number of PRACH repetitions included in a target PRACH repetition process and a PRACH transmitting power of PRACH repetitions in a target PRACH repetition process; where the target PRACH repetition process is one PRACH repetition process respond by the network through the RAR in at least one PRACH repetition process.

In some optional implementations, determining, by the terminal device, the PUSCH transmitting power in the random access process according to the number of PRACH repetitions included in the target PRACH repetition process and the PRACH transmitting power of the PRACH repetitions in the target PRACH repetition process includes:

determining, by the terminal device, a adjustment amount of the PUSCH transmitting power according to the number of PRACH repetitions included in the target PRACH repetition process and the PRACH transmitting power of the PRACH repetitions in the target PRACH repetition process; and

determining, by the terminal device, the PUSCH transmitting power in the random access process according to the adjustment amount of the PUSCH transmitting power.

In some optional implementations, determining, by the terminal device, the adjustment amount of the PUSCH transmitting power according to the number of PRACH repetitions included in the target PRACH repetition process and the PRACH transmitting power of the PRACH repetitions in the target PRACH repetition process includes:

determining, by the terminal device, a power adjustment amount related to the number of PRACH repetitions and the PRACH transmitting power according to the number of PRACH repetitions included in the target PRACH repetition process and the PRACH transmitting power of the PRACH repetitions in the target PRACH repetition process; and

determining, by the terminal device, the adjustment amount of the PUSCH transmitting power according to the power adjustment amount related to the number of PRACH repetitions and the PRACH transmitting power.

In some optional implementations, a correspondence between the power adjustment amount, and the number of PRACH repetitions and the PRACH transmitting power and is agreed upon by a protocol, or the correspondence between the power adjustment amount, and the number of PRACH repetitions and the PRACH transmitting power is configured by a network device.

In some optional implementations, the correspondence between the power adjustment amount, and the number of PRACH repetitions may also be determined based on a preset rule, and the preset rule may be a function, a table, or the like.

Specifically, in Embodiment 3, in order to achieve a coverage level similar to that of the PRACH, the Msg3 PUSCH transmitting power may refer to both the number of PRACH repetitions and the PRACH power of PRACH repetitions. Specifically, the parameter $f(i)$ in the above formula 2 is set to $\Delta P_{rep} + \delta_{msg2}$, where $\Delta P_{rep}$ is a power adjustment amount related to the number of PRACH repetitions and the PRACH transmitting power. Specifically, $\Delta P_{rep}$ may be calculated by the number of PRACH repetitions (i.e., S) included in the target PRACH repetition process and the PRACH transmitting power repetitions (i.e., P) of PRACH repetitions in the target PRACH repetition process, such as $\Delta P_{rep} = S * P$, or $\Delta P_{rep} = \alpha * S * P$, where $\alpha$ is an adjustment coefficient, and the range of $\alpha$ is between 0 to 1.

Embodiment 4: the first information is the number of times that the PRACH repetition processes are performed, that is, the terminal device determines the PUSCH transmitting power in the random access process according to the number of times that the PRACH repetition processes are performed.

It should be noted that, in the random access process, the network will configure the maximum number of PRACH transmissions. In a case where the maximum number of PRACH transmissions is reached and the RAR from the network is still not received, the random access process is considered to have failed. The maximum number of transmissions is configured through information element *preambleTransMax*. The value of *preambleTransMax* includes 3, 4, 5, 6, 7, 8, 10, 20, 50, 100, and 200. The parameter *PREAMBLE_POWER_RAMPING_COUNTER* is increased by 1 for each PRACH transmission. Specifically, in a random access process based on PRACH repetitions, the terminal device may perform multiple PRACH repetition processes until the RAR transmitted by the network has been received. In a case where PRACH repetitions are adopted, whether to terminate the random access process may be determined according to whether the number of PRACH repetition processes performed reaches the configured maximum value. Therefore, each PRACH repetition process corresponds to a value of a counting parameter, and the counting parameter starts from 1. The counting parameter increases by 1 for each PRACH repetition process being performed.

In some optional implementations of Embodiment 4, the terminal device determines the PUSCH transmitting power in the random access process according to the number of times that the PRACH repetition processes are performed; where the number of times that the PRACH repetition processes are performed is determined based on a target PRACH repetition process, and the target PRACH repetition process is one PRACH repetition process responded by a network through a RAR in at least one PRACH repetition process.

In some optional implementations, determining, by the terminal device, the PUSCH transmitting power in the random access process according to the number of times that the PRACH repetition processes are performed includes:

determining, by the terminal device, an adjustment amount of the PUSCH transmitting power according to the number of times that the PRACH repetition processes are performed; and
determining, by the terminal device, the PUSCH transmitting power in the random access process according to the adjustment amount of the PUSCH transmitting power.

In some optional implementations, determining, by the terminal device, the adjustment amount of the PUSCH transmitting power according to the number of times that the PRACH repetition processes are performed includes:
determining, by the terminal device, a power adjustment amount related to the number of times that the PRACH repetition processes are performed according to the number of times that the PRACH repetition processes are performed; and
determining, by the terminal device, the adjustment amount of the PUSCH transmitting power according to the power adjustment amount related to the number of times that the PRACH repetition processes are performed.

In some optional implementations, a correspondence between the number of times that the PRACH repetition processes are performed and the power adjustment amount is agreed upon by a protocol, or the correspondence between the number of times that the PRACH repetition processes are performed and the power adjustment amount is configured by a network device.

In some optional implementations, the correspondence between the number of times that the PRACH repetition processes are performed and the power adjustment amount may also be determined based on a preset rule, and the preset rule may be a function, a table, or the like.

Specifically, in Embodiment 4, the PRACH repetition process responded by the network corresponds to a value of a counting parameter. The power of the Msg3 PUSCH may refer to the value of the counting parameter corresponding to the PRACH repetition process responded by the network, to determine the transmitting power. Specifically, for example, the parameter $f(i)$ in the above formula 2 is set to $\Delta P_{rep} + \delta_{msg2}$, where the $\Delta P_{rep}$ is a power adjustment amount related to the value of the counting parameter corresponding to the PRACH repetition process responded by the network.

Embodiment 5: the first information is the information indicated in the RAR, that is, the terminal device determines the PUSCH transmitting power in the random access process according to the information indicated in the RAR.

In some optional implementations of Embodiment 5, the terminal device determines the PUSCH transmitting power in the random access process according to the information indicated in the RAR corresponding to q target PRACH repetition process; where the information indicated in the RAR is a parameter N, a value of N represents an N-th PRACH transmission in the target PRACH repetition process, and N is a positive integer.

Optionally, the network successfully detects a preamble in the N-th PRACH transmission in the target PRACH repetition process. That is, the network may successfully detect the preamble by performing combined receiving on the first N PRACH transmissions in the target PRACH repetition process. The transmitting power of the first N PRACH transmissions reflects the transmission parameter that may meet the coverage of the PRACH.

In some optional implementations, determining, by the terminal device, the PUSCH transmitting power in the random access process according to the information indicated in the RAR corresponding to the target PRACH repetition process includes:

determining, by the terminal device, an adjustment amount of the PUSCH transmitting power according to the value of N; and
determining, by the terminal device, the PUSCH transmitting power in the random access process according to the adjustment amount of the PUSCH transmitting power.

In some optional implementations, determining, by the terminal device, the adjustment amount of the PUSCH transmitting power according to the value of N includes:

determining, by the terminal device, a power adjustment amount related to the number of PRACH repetitions according to the value of N; and
determining, by the terminal device, the adjustment amount of the PUSCH transmitting power according to the power adjustment amount related to the number of PRACH repetitions.

In some optional implementations, a correspondence between the number of PRACH repetitions and the power adjustment amount is agreed upon by a protocol, or the correspondence between the number of PRACH repetitions and the power adjustment amount is configured by a network device.

In some optional implementations, the correspondence between the number of PRACH repetitions and the power adjustment amount may also be determined based on a preset rule, and the preset rule may be a function, a table, and the like.

Specifically, in Embodiment 5, when the network responds through the RAR, the corresponding preamble information is indicated to the terminal device. For example, the RAR indicates information of the number of the PRACH transmissions in one PRACH repetition process. The power of the Msg3 PUSCH may be calculated based on the number information and power information of the indicated PRACH, the specific method may refer to Embodiment 1 to Embodiment 3. The number information corresponds to a sequence number of the PRACH transmission indicated by the RAR, which indicates the number of times of the PRACH transmission in the PRACH repetition process, that is, how many PRACH repetitions have been completed up to the PRACH transmission.

Embodiment 6: the first information is the power offset parameter related to the PRACH repetitions, that is, the terminal device determines the PUSCH transmitting power in the random access process according to the power offset parameter related to the PRACH repetitions.

It should be noted that, the power offset parameter related to the PRACH repetitions may be set, where (i.e., the above formula 2).

In some optional implementations of Embodiment 6, the terminal device determines the PUSCH transmitting power in the random access process according to the power offset parameter related to the PRACH repetitions.

In some optional implementations, determining, by the terminal device, the PUSCH transmitting power in the random access process according to the power offset parameter related to the PRACH repetitions includes:

determining, by the terminal device, a power related to the PRACH repetitions according to the power offset parameter related to the PRACH repetitions; and

determining, by the terminal device, the PUSCH transmitting power in the random access process according to the power related to the PRACH repetitions.

It should be noted that, in the above formula 2, $Po = P_{O\_PRE} + \Delta_{Rep\_PREAMBLE\_Msg3}$, $P_{O\_PRE}$ is a target received power of the preamble, $\Delta_{Rep\_PREAMBLE\_Msg3}$ is the power offset parameter of the Msg3, and the power offset parameter is a power offset parameter related to the PRACH repetitions.

In the embodiment, the power related to the PRACH repetitions may be expressed as Po, where $Po = P_{O\_PRE} + \Delta_{Rep\_PREAMBLE\_Msg3} + \Delta_{PRE}$, $\Delta_{Rep\_PREAMBLE\_Msg3}$ is the power offset parameter of the Msg3, and $\Delta_{PRE}$ is a power offset parameter related to the PRACH repetitions. That is, on the basis of Po in the above formula 2, the power offset parameter $\Delta_{PRE}$ related to the PRACH repetitions bas been added.

In some optional implementations, Po in Embodiment 6 may also be applied to the solutions of Embodiment 1 to Embodiment 5 above. That is, the solutions of Embodiment 1 to Embodiment 5 are improvements to $f(i)$ in the above formula 2. Further, the solution of Embodiment 6 may also be an improvement Po in the above formula 2.

In some optional implementations, the terminal device receives first indication information, where the first indication information is used to indicate whether the terminal device uses the solution of Embodiment 6, that is, adjusting Po in the above formula 2 to: $Po = P_{O\_PRE} + \Delta_{Rep\_PREAMBLE\_Msg3} + \Delta_{PRE}$.

Therefore, in the embodiments of the present application, the terminal device may determine the PUSCH transmitting power in the random access process based on at least one of: the number of PRACH repetitions, the PRACH transmitting power of the PRACH repetitions, the number of times that the PRACH repetition processes are performed, the information indicated in the RAR, or the power offset parameter related to the PRACH repetitions. The PUSCH transmitting power in the random access process may be determined more reasonably, thereby improving the transmission performance of the PUSCH in the random access process.

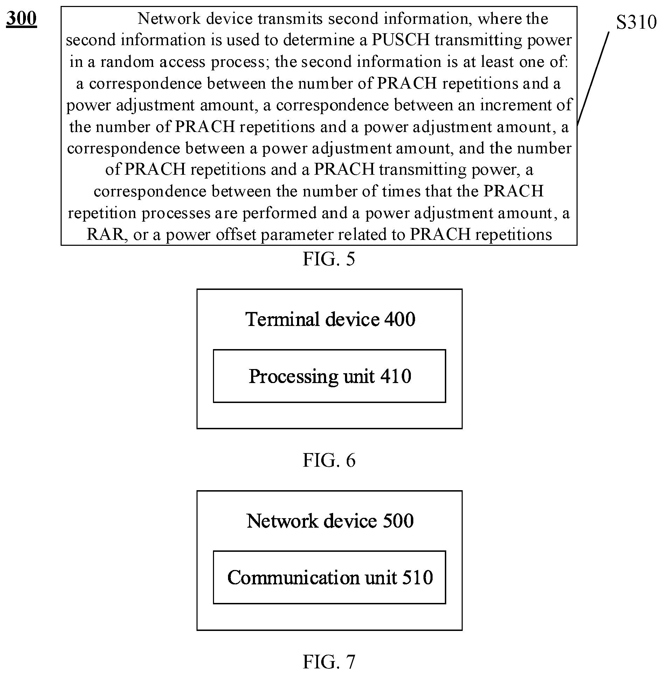

The terminal side embodiments of the present application are described in detail above in combination with FIGS. 3 to 4. The network side embodiments of the present application will be described in detail below in combination with FIG. 5. It should be understood that the network side embodiments and the terminal side embodiments correspond to each other, and similar descriptions may refer to the terminal side embodiments.

FIG. 5 is a schematic flowchart of a wireless communication method 300 according to the embodiments of the present application. As shown in FIG. 5, the wireless communication method 300 may include at least part of the following contents.

S310, the network device transmits second information, where the second information is used to determine a PUSCH transmitting power in a random access process; the second information is at least one of: a correspondence between the number of PRACH repetitions and a power adjustment amount, a correspondence between an increment of the number of PRACH repetitions and a power adjustment amount, a correspondence between a power adjustment amount, and the number of PRACH repetitions and a PRACH transmitting power, a correspondence between the number of times that the PRACH repetition processes are performed and a power adjustment amount, a RAR, or a power offset parameter related to PRACH repetitions.

In the embodiments of the present application, the network device may transmit at least one of: the correspondence between the number of PRACH repetitions and the power adjustment amount, the correspondence between the increment of the number of PRACH repetitions and the power adjustment amount, the correspondence between the power adjustment amount, and the number of PRACH repetitions and the PRACH transmitting power, the correspondence between the number of times that the PRACH repetition processes are performed and the power adjustment amount, the RAR, or the power offset parameter related to the PRACH repetitions, so that the terminal device may determine the PUSCH transmitting power in the random access process based on the content transmitted by the network device, and may more reasonably determine the PUSCH transmitting power in the random access process, thereby improving the transmission performance of the PUSCH in the random access process.

In some embodiments, in a case where the second information is the correspondence between the number of PRACH repetitions and the power adjustment amount, the PUSCH transmitting power in the random access process is determined based on an adjustment amount of the PUSCH transmitting power, and the adjustment amount of the PUSCH transmitting power is determined based on the following information:

the correspondence between the number of PRACH repetitions and the power adjustment amount, and the number of PRACH repetitions included in a target PRACH repetition process;
where the target PRACH repetition process is one PRACH repetition process respond by the network through the RAR in at least one PRACH repetition process.

In some embodiments, in a case where the second information is the correspondence between the increment of the number of PRACH repetitions and the power adjustment amount, the PUSCH transmitting power in the random access process is determined based on an adjustment amount of the PUSCH transmitting power, and the adjustment amount of the PUSCH transmitting power is determined based on the following information:

the correspondence between the increment of the number of PRACH repetitions and the power adjustment amount, and an increment of the number of PRACH repetitions included in a target PRACH repetition process compared to the number of PRACH repetitions included in a first PRACH repetition process;
where the target PRACH repetition process is the one PRACH repetition process responded by the network through a RAR in at least one PRACH repetition process.

In some embodiments, in a case where the second information is the correspondence between the power adjustment amount, and the number of PRACH repetitions and the PRACH transmitting power, the PUSCH transmitting power in the random access process is determined based on an adjustment amount of the PUSCH transmitting power, and the adjustment amount of the PUSCH transmitting power is determined based on the following information:

the correspondence between the power adjustment amount, and the number of PRACH repetitions and the PRACH transmitting power, and the number of PRACH repetitions included in a target PRACH repetition process and a PRACH transmitting power of the PRACH repetitions in the target PRACH repetition process;
where the target PRACH repetition process is one PRACH repetition process responded by the network through a RAR in at least one PRACH repetition process.

In some embodiments, in a case where the second information is the correspondence between the number of times that the PRACH repetition processes are performed and the power adjustment amount, the PUSCH transmitting power in the random access process is determined based on an adjustment amount of the PUSCH transmitting power, and the adjustment amount of the PUSCH transmitting power is determined based on the following information:

the correspondence between the number of times that the PRACH repetition processes are performed and the power adjustment amount, and the number of times that the PRACH repetition processes are performed;
where the number of times that the PRACH repetition processes are performed is determined based on a target PRACH repetition process, and the target PRACH repetition process is the one PRACH repetition process responded by a network through a RAR in at least one PRACH repetition process.

In some embodiments, in a case where the second information is the RAR, the PUSCH transmitting power in the random access process is determined based on an adjustment amount of the PUSCH transmitting power, and the adjustment amount of the PUSCH transmitting power is determined based on the information indicated in the RAR corresponding to a target PRACH repetition process;

where the information indicated in the RAR is a parameter N, a value of N represents an N-th PRACH transmission in the target PRACH repetition process, and N is a positive integer.

In some embodiments, the adjustment amount of the PUSCH transmitting power being determined based on the information indicated in the RAR corresponding to the target PRACH repetition process includes that:

the adjustment amount of the PUSCH transmitting power is determined based on the following information:

the value of N, the correspondence between the number of PRACH repetitions and the power adjustment amount.

In some embodiments, the correspondence between the number of PRACH repetitions and the power adjustment amount is agreed upon by a protocol, or the correspondence between the number of PRACH repetitions and the power adjustment amount is configured by the network device.

In some embodiments, in a case where the second information is the power offset parameter related to the PRACH repetitions, the PUSCH transmitting power in the random access process is determined based on the power offset parameter related to the PRACH repetitions.

In some embodiments, the PUSCH transmitting power in the random access process being determined based on the power offset parameter related to the PRACH repetitions includes that:

the PUSCH transmitting power in the random access process is determined based on a power related to the PRACH repetitions, and the power related to the PRACH repetitions is determined based on the power offset parameter related to the PRACH repetitions.

Therefore, in the embodiments of the present application, the network device may transmit at least one of: the correspondence between the number of PRACH repetitions and the power adjustment amount, the correspondence between the increment of the number of PRACH repetitions and the power adjustment amount, the correspondence between the power adjustment amount, and the number of PRACH repetitions and the PRACH transmitting power, the correspondence between the number of times that the PRACH repetition processes are performed and the power adjustment amount, the RAR, and the power offset parameter related to the PRACH repetitions, so that the terminal device may determine the PUSCH transmitting power in the random access process based on the content transmitted by the network device, and may more reasonably determine the PUSCH transmitting power in the random access process, thereby improving the transmission performance of the PUSCH in the random access process.

The method embodiments of the present application are described in detail above in combination with FIGS. 3 to 5. The apparatus embodiments of the present application are described in detail below in combination with FIGS. 6 to 10. It should be understood that the apparatus embodiments and the method embodiments correspond to each other, and similar descriptions may refer to the method embodiments.

FIG. 6 shows a schematic block diagram of a terminal device 400 according to the embodiments of the present application. As shown in FIG. 6, the terminal device 400 includes:

a processing unit 410, configured to determine a physical uplink shared channel (PUSCH) transmitting power in a random access process according to first information;

where the first information is at least one of:

the number of physical random access channel (PRACH) repetitions, a PRACH transmitting power of the PRACH repetitions, the number of times that the PRACH repetition processes are performed, information indicated in a random access response (RAR), or a power offset parameter related to the PRACH repetitions.

In some embodiments, in a case where the first information is the number of PRACH repetitions, the processing unit 410 is specifically configured to:

determine the PUSCH transmitting power in the random access process according to the number of PRACH repetitions included in a target PRACH repetition process;

where the target PRACH repetition process is one PRACH repetition process responded by a network through a RAR in at least one PRACH repetition process.

In some embodiments, the processing unit 410 is specifically configured to:

determine an adjustment amount of the PUSCH transmitting power according to the number of PRACH repetitions included in the target PRACH repetition process; and

determine the PUSCH transmitting power in the random access process according to the adjustment amount of the PUSCH transmitting power.

In some embodiments, the processing unit 410 is specifically configured to:

determine a power adjustment amount related to the number of PRACH repetitions according to the number of PRACH repetitions included in the target PRACH repetition process; and

determine the adjustment amount of the PUSCH transmitting power according to the power adjustment amount related to the number of PRACH repetitions.

In some embodiments, a correspondence between the number of PRACH repetitions and the power adjustment amount is agreed upon by a protocol, or the correspondence between the number of PRACH repetitions and the power adjustment amount is configured by a network device.

In some embodiments, the processing unit 410 is specifically configured to:

determine a power adjustment amount related to an increment of the number of PRACH repetitions according to an increment of the number of PRACH repetitions included in the target PRACH repetition process compared to the number of PRACH repetitions included in a first PRACH repetition process; and

determine the adjustment amount of the PUSCH transmitting power according to the power adjustment amount related to the increment of the number of PRACH repetitions.

In some embodiments, a correspondence between the increment of the number of PRACH repetitions and the power adjustment amount is agreed upon by a protocol, or the correspondence between the increment of the number of PRACH repetitions and the power adjustment amount is configured by a network device.

In some embodiments, in a case where the first information is the PRACH transmitting power of the PRACH repetitions, the processing unit 410 is specifically configured to:

determine the PUSCH transmitting power in the random access process according to a PRACH transmitting power in a target PRACH repetition process; or

determine the PUSCH transmitting power in the random access process according to a lifting amount of the PRACH transmitting power in the target PRACH repetitions process compared to a PRACH transmitting power in a first PRACH repetition process;

where the target PRACH repetition transmission process is one PRACH repetition process responded by the network through a RAR in at least one PRACH repetition process.

In some embodiments, PRACH transmitting powers of different PRACH repetitions in one PRACH repetition process are the same.

In some embodiments, in a case where the first information is the PRACH transmitting power of the PRACH repetitions, the processing unit 410 is specifically configured to:

determine the PUSCH transmitting power in the random access process according to a PRACH transmitting power of a first target PRACH transmission in a target PRACH repetition process; or

determine the PUSCH transmitting power in the random access process according to a lifting amount of a PRACH transmitting power of a second target PRACH transmission in the target PRACH repetitions process compared to a PRACH transmitting power of a third target PRACH transmission in a first PRACH repetition process;

where the target PRACH repetition process is the one PRACH repetition process responded by the network through a RAR in at least one PRACH repetition process.

In some embodiments, the first target PRACH transmission is a first PRACH transmission or a last PRACH transmission in the target PRACH repetition process.

In some embodiments, the second target PRACH transmission is a first PRACH transmission or a last PRACH transmission in the target PRACH repetition process, and the third target PRACH transmission is a first PRACH transmission or a last PRACH transmission in the first PRACH repetition process.

In some embodiments, PRACH transmitting powers of different PRACH transmissions in one PRACH repetition process are different.

In some embodiments, in a case where the first information is the number of PRACH repetitions and the PRACH transmitting power of the PRACH repetitions, the processing unit 410 is specifically configured to:

determine the PUSCH transmitting power in the random access process according to the number of PRACH repetitions included in a target PRACH repetition process and a PRACH transmitting power of PRACH repetitions in the target PRACH repetition process;

where the target PRACH repetition process is the one PRACH repetition process responded by the network through a RAR in at least one PRACH repetition process.

In some embodiments, the processing unit 410 is specifically configured to:

determine an adjustment amount of the PUSCH transmitting power according to the number of PRACH repetitions included in the target PRACH repetition process and the PRACH transmitting power of the PRACH repetitions in the target PRACH repetition process; and
determine the PUSCH transmitting power in the random access process according to the adjustment amount of the PUSCH transmitting power.

In some embodiments, the processing unit 410 is specifically configured to:

determine a power adjustment amount related to the number of PRACH repetitions and the PRACH transmitting power according to the number of PRACH repetitions included in the target PRACH repetition process and the PRACH transmitting power of the PRACH repetitions in the target PRACH repetition process; and
determine the adjustment amount of the PUSCH transmitting power according to the power adjustment amount related to the number of PRACH repetitions and the PRACH transmitting power.

In some embodiments, a correspondence between the power adjustment amount, and the number of PRACH repetitions and the PRACH transmitting power is agreed upon by the protocol, or the correspondence between the power adjustment amount, and the number of PRACH repetitions and the PRACH transmitting powe is configured by the network device.

In some embodiments, in a case where the first information is the number of times that the PRACH repetition processes are performed, the processing unit 410 is specifically configured to:

determine the PUSCH transmitting power in the random access process according to the number of times that the PRACH repetition processes are performed;
where the number of times that the PRACH repetition processes are performed is determined based on a target PRACH repetition transmission process, and the target PRACH repetition transmission process is the one PRACH repetition process responded by the network through a RAR in at least one PRACH repetition process.

In some embodiments, the processing unit 410 is specifically configured to:

determine an adjustment amount of the PUSCH transmitting power according to the number of times that the PRACH repetition processes are performed; and
determine the PUSCH transmitting power in the random access process according to the adjustment amount of the PUSCH transmitting power.

In some embodiments, the processing unit 410 is specifically configured to:

determine a power adjustment amount related to the number of times that the PRACH repetition processes are performed according to the number of times that the PRACH repetition processes are performed; and
determine the adjustment amount of the PUSCH transmitting power according to the power adjustment amount related to the number of times that the PRACH repetition processes are performed.

In some embodiments, a corresponding between the number of times that the PRACH repetition processes are performed and the power adjustment amount is agreed upon by the protocol, or the correspondence between the number of times that the PRACH repetition processes are performed and the power adjustment amount is configured by a network device.

In some embodiments, in a case where the first information is the information indicated in the RAR, the processing unit 410 is specifically configured to:

determine the PUSCH transmitting power in the random access process according to information indicated in the RAR corresponding to a target PRACH repetition process;
where the information indicated in the RAR is a parameter N, a value of N represents an N-th PRACH transmission in the target PRACH repetition process, and N is a positive integer.

In some embodiments, the processing unit 410 is specifically configured to:

determine an adjustment amount of the PUSCH transmitting power according to the value of N; and

determine the PUSCH transmitting power in the random access process according to the adjustment amount of the PUSCH transmitting power.

In some embodiments, the processing unit 410 is specifically configured to:

determine a power adjustment amount related to the number of the PRACH repetitions according to the value of N; and determine the adjustment amount of the PUSCH transmitting power according to the power adjustment amount related to the number of PRACH repetitions.

In some embodiments, a correspondence between the number of PRACH repetitions and the power adjustment amount is agreed upon by the protocol, or the correspondence between the number of PRACH repetitions and the power adjustment amount is configured by a network device.

In some embodiments, in a case where the first information is the power offset parameter related to the PRACH repetitions, the processing unit 410 is specifically configured to:

determine the PUSCH transmitting power in the random access process according to the power offset parameter related to the PRACH repetitions.

In some embodiments, the processing unit 410 is specifically configured to:

determine a power related to the PRACH repetitions according to the power offset parameter related to the PRACH repetitions; and determine the PUSCH transmitting power in the random access process according to the power related to the PRACH repetitions.

In some embodiments, a communication unit may be a communication interface or a transceiver, or an input/output interface of a communication chip or a system on chip. The processing unit above may be one or more processors.

It should be understood that the terminal device 400 according to the embodiments of the present application may correspond to the terminal device in the method embodiments of the present application, and the above and other operations and/or functions of various units in the terminal device 400 are respectively for realizing the corresponding processes of the terminal device in the method 200 shown in FIG. 3, which will not be repeated here for the sake of brevity.

FIG. 7 shows a schematic block diagram of a network device 500 according to the embodiments of the present application. As shown in FIG. 7, the network device 500 includes:

a communication unit 510, configured to transmit second information, where the second information is used to determine a physical uplink shared channel (PUSCH) transmitting power in a random access process; where the second information is at least one of: a correspondence between the number of physical random access channel (PRACH) repetitions and a power adjustment amount, a correspondence between an increment of the number of PRACH repetitions and a power adjustment amount, a correspondence between a power adjustment amount, and the number of PRACH repetitions and a PRACH transmitting power, a correspondence between the number of times that the PRACH repetition processes are performed and a power adjustment amount, a random access response (RAR), or a power offset parameter related to the PRACH repetitions.

In some embodiments, in a case where the second information is the correspondence between the number of PRACH repetitions and the power adjustment amount, the PUSCH transmitting power in the random access process is determined based on an adjustment amount of the PUSCH transmitting power, and the adjustment amount of the PUSCH transmitting power is determined based on the following information:

the correspondence between the number of PRACH repetitions and the power adjustment amount, and the number of PRACH repetitions included in a target PRACH repetition process; where the target PRACH repetition process is the one PRACH repetition process responded by a network through a RAR in at least one PRACH repetition process.

In some embodiments, in a case where the second information is the correspondence between the increment of the number of PRACH repetitions and the power adjustment amount, the PUSCH transmitting power in the random access process is determined based on an adjustment amount of the PUSCH transmitting power, and the adjustment amount of the PUSCH transmitting power is determined based on the following information:

the correspondence between the increment of the number of PRACH repetitions and the power adjustment amount, and an increment of the number of PRACH repetitions included in a target PRACH repetition process compared to the number of PRACH repetitions included in a first PRACH repetition process;
where the target PRACH repetition process is the one PRACH repetition process responded by a network through a RAR in at least one PRACH repetition process.

In some embodiments, in a case where the second information is the correspondence between the power adjustment amount, and the number of PRACH repetitions and the PRACH transmitting power, the PUSCH transmitting power in the random access process is determined based on an adjustment amount of the PUSCH transmitting power, and the adjustment amount of the PUSCH transmitting power is determined based on the following information:

the correspondence between the power adjustment amount, and the number of PRACH repetitions and the PRACH transmitting power, and the number of PRACH repetitions included in a target PRACH repetition process and a PRACH transmitting power of the PRACH repetitions in the target PRACH repetition process;
where the target PRACH repetition process is the one PRACH repetition process responded by a network through a RAR in at least one PRACH repetition process.

In some embodiments, in a case where the second information is the correspondence between the number of times that the PRACH repetition process is performed and the power adjustment amount, the PUSCH transmitting power in the random access process is determined based on an adjustment amount of the PUSCH transmitting power, and the adjustment amount of the PUSCH transmitting power is determined based on the following information:

the correspondence between the number of times that the PRACH repetition processes are performed and the power adjustment amount, and the number of times that the PRACH repetition process are performed;
where the number of times that the PRACH repetition processes are performed is determined based on a target PRACH repetition process, and the target PRACH repetition process is one PRACH repetition process responded by a network through a RAR in at least one PRACH repetition process.

In some embodiments, in a case where the second information is the RAR, the PUSCH transmitting power in the random access process is determined based on an adjustment amount of the PUSCH transmitting power, and the adjustment amount of the PUSCH transmitting power is determined based on information indicated in the RAR corresponding to a target PRACH repetition process;
where the information indicated in the RAR is a parameter N, a value of N represents an N-th PRACH transmission in the target PRACH repetition process, and N is a positive integer.
In some embodiments, the adjustment amount of the PUSCH transmitting power being determined based on the information indicated in the RAR corresponding to the target PRACH repetition process includes that:
the adjustment amount of the PUSCH transmitting power is determined based on the following information:
the value of N, the correspondence between the number of PRACH repetitions and the power adjustment amount.
In some embodiments, the correspondence between the number of PRACH repetitions and the power adjustment amount is agreed upon by a protocol, or the correspondence between the number of PRACH repetitions and the power adjustment amount is configured by the network device.
In some embodiments, in a case where the second information is the power offset parameter related to the PRACH repetitions, the PUSCH transmitting power in the random access process is determined based on the power offset parameter related to the PRACH repetitions.
In some embodiments, the PUSCH transmitting power in the random access process being determined based on the power offset parameter related to the PRACH repetitions includes that:
the PUSCH transmitting power in the random access process is determined based on a power related to the PRACH repetitions, and the power related to the PRACH repetitions is determined based on the power offset parameter related to the PRACH repetitions.
In some embodiments, the communication unit may be a communication interface or a transceiver, or an input/output interface of a communication chip or a system on chip. A processing unit above may be one or more processors.
It should be understood that the network device 500 according to the embodiments of the present application may correspond to the network device in the method embodiments of the present application, and the above and other operations and/or functions of various units in the network device 500 are respectively for realizing the corresponding processes of the network device in the method 300 shown in FIG. 5, which will not be repeated here for the sake of brevity.

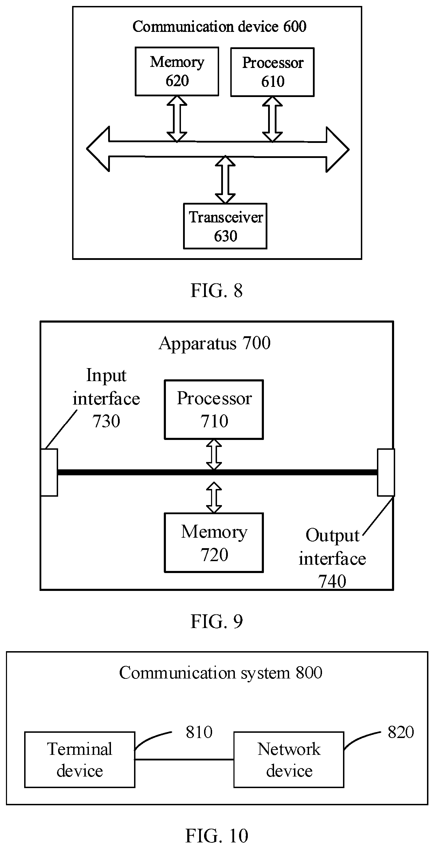

FIG. 8 is a schematic structural diagram of a communication device 600 provided in the embodiments of the present application. The communication device 600 shown in FIG. 8 includes a processor 610, and the processor 610 may call a computer program from a memory and run the computer program to implement the methods in the embodiments of the present application.

In some embodiments, as shown in FIG. 8, the communication device 600 may further include a memory 620. The processor 610 may call a computer program from the memory 620 and run the computer program to implement the methods in the embodiments of the present application.

The memory 620 may be a separate device independent of the processor 610, or may be integrated into the processor 610.

In some embodiments, as shown in FIG. 8, the communication device 600 may further include a transceiver 630, and the processor 610 may control the transceiver 630 to communicate with other devices, specifically, to transmit information or data to other devices, or to receive information or data transmitted by other devices.

The transceiver 630 may include a transmitter and a receiver. The transceiver 630 may further include an antenna, and the number of the antenna may be one or more.

In some embodiments, the processor 610 may implement the functions of a processing unit in a terminal device, or the processor 610 may implement the functions of a processing unit in a network device, which will not be repeated here for the sake of brevity.

In some embodiments, the transceiver 630 may implement the functions of a communication unit in a terminal device, which will not be repeated here for the sake of brevity.

In some embodiments, the transceiver 630 may implement the functions of a communication unit in a network device, which will not be repeated here for the sake of brevity.

In some embodiments, the communication device 600 may specifically be a network device of the embodiments of the present application, and the communication device 600 may implement the corresponding processes implemented by the network device in various methods of the embodiments of the present application, which will not be repeated here for the sake of brevity.

In some embodiments, the communication device 600 may specifically be a terminal device of the embodiments of the present application, and the communication device 600 may implement the corresponding processes implemented by the terminal device in various methods of the embodiments of the present application, which will not be repeated here for the sake of brevity.

FIG. 9 is a schematic structural diagram of an apparatus according to the embodiments of the present application. The apparatus 700 shown in FIG. 9 includes a processor 710, and the processor 710 may call a computer program from a memory and run the computer program to implement the methods in the embodiments of the present application.

In some embodiments, as shown in FIG. 9, the apparatus 700 may further include a memory 720. The processor 710 may call a computer program from the memory 720 and run the computer program to implement the methods in the embodiments of the present application.

The memory 720 may be a separate device independent of the processor 710, or may be integrated into the processor 710.

In some embodiments, the apparatus 700 may further include an input interface 730. The processor 710 may control the input interface 730 to communicate with other devices or chips, and specifically, may obtain information or data transmitted by other devices or chips. Optionally, the processor 710 may be located on a chip or off a chip.

In some embodiments, the processor 710 may implement the functions of a processing unit in a terminal device, or the processor 710 may implement the functions of a processing unit in a network device, which will not be repeated here for the sake of brevity.

In some embodiments, the input interface 730 may implement the function of a communication unit in a terminal device, or the input interface 730 may implement the function of a communication unit in a network device.

In some embodiments, the apparatus 700 may further include an output interface 740. The processor 710 may control the output interface 740 to communicate with other devices or chips, and specifically, may output information or data to other devices or chips. Optionally, the processor 710 may be located on a chip or off a chip.

In some embodiments, the output interface 740 may implement the functions of a communication unit in a terminal device, or the output interface 740 may implement the functions of a communication unit in a network device.

In some embodiments, the apparatus may be applied to the network device in the embodiments of the present application, and the apparatus may implement the corresponding processes implemented by the network device in the various methods of the embodiments of the present application, which will not be repeated here, for the sake of brevity.

In some embodiments, the apparatus may be applied to the terminal device in the embodiments of the present application, and the apparatus may implement the corresponding processes implemented by the terminal device in various method in the embodiments of the present application, which will not be repeated here for the sake of brevity.

In some embodiments, the apparatus mentioned in the embodiments of the present application may also be a chip. For example, it may be a system level chip, a system-on-chip, a chip system, or a system-on-chip chip, etc.

FIG. 10 is a schematic block diagram of a communication system 800 provided in the embodiments of the present application. As shown in FIG. 10, the communication system 800 includes a terminal device 810 and a network device 820.

The terminal device 810 may be configured to implement the corresponding functions implemented by the terminal device in the above methods, and the network device 820 may be configured to implement the corresponding functions implemented by the network device in the above methods, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component. Various methods, steps and logical block diagrams disclosed in the embodiments of the present application may be implemented or performed. The general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile (transitory) and non-volatile (non-transitory) memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. Through illustrative, rather than limiting illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

A computer-readable storage medium for storing a computer program is further provided in the embodiments of the present application.

In some embodiments, the computer-readable storage medium may be applied to the network device in the embodiments of the present application, and the computer program causes the computer to perform the corresponding processes implemented by the network device in the various methods of the embodiments of the present application, which will not be repeated here for the sake of brevity.

In some embodiments, the computer-readable storage medium may be applied to the terminal device in the embodiments of the present application, and the computer program causes the computer to perform the corresponding processes implemented by the terminal device in the various methods of the embodiments of the present application, which will not be repeated here for the sake of brevity.

A computer program product is further provided in the embodiments of the present application, including computer program instructions.

In some embodiments, the computer program product may be applied to the network device in the embodiments of the present application, and the computer program instructions cause the computer to perform the corresponding processes implemented by the network device in the various methods of the embodiments of the present application, which will not be repeated here for the sake of brevity.

In some embodiments, the computer program product may be applied to the terminal device in the embodiments of the present application, and the computer program instructions cause the computer to perform the corresponding processes implemented by the terminal device in the various methods of the embodiments of the present application, which will not be repeated here for the sake of brevity.

A computer program is further provided in the embodiments of the present application.

In some embodiments, the computer program may be applied to the network device in the embodiments of the present application. The computer program, when executed on a computer, causes the computer to perform the corresponding processes implemented by the network device in the various methods of the embodiments of the present application, which will not be repeated here for the sake of brevity.

In some embodiments, the computer program may be applied to the terminal device in the embodiments of the present application. The computer program, when executed on a computer, causes the computer to perform the corresponding processes implemented by the terminal device in the various methods of the embodiments of the present application, which will not be repeated here for the sake of brevity.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in a form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in a form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a read-only memory (ROM), a random access memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

**Claims**

1. A wireless communication method, comprising:

    determining, by a terminal device, a physical uplink shared channel (PUSCH) transmitting power in a random access process according to first information;
    wherein the first information is at least one of:
    the number of physical random access channel (PRACH) repetitions, a PRACH transmitting power of the PRACH repetitions, the number of times that PRACH repetition processes are performed, information indicated in a random access response (RAR), or a power offset parameter related to the PRACH repetitions.

2. The method according to claim 1, wherein
in a case where the first information is the number of PRACH repetitions, determining, by the terminal device, the PUSCH transmitting power in the random access process according to the first information comprising:

    determining, by the terminal device, the PUSCH transmitting power in the random access process according to the number of PRACH repetitions comprised in a target PRACH repetition process;

wherein the target PRACH repetition process is one PRACH repetition process responded by a network through a RAR in at least one PRACH repetition process.

3. The method according to claim 2, wherein determining, by the terminal device, the PUSCH transmitting power in the random access process according to the number of PRACH repetitions comprised in the target PRACH repetition process comprises:

   determining, by the terminal device, an adjustment amount of the PUSCH transmitting power according to the number of PRACH repetitions comprised in the target PRACH repetition process; and
   determining, by the terminal device, the PUSCH transmitting power in the random access process according to the adjustment amount of the PUSCH transmitting power.

4. The method according to claim 3, wherein determining, by the terminal device, the adjustment amount of the PUSCH transmitting power according to the number of PRACH repetitions comprised in the target PRACH repetition process comprises:

   determining, by the terminal device, a power adjustment amount related to the number of PRACH repetitions according to the number of PRACH repetitions comprised in the target PRACH repetition process; and
   determining, by the terminal device, the adjustment amount of the PUSCH transmitting power according to the power adjustment amount related to the number of PRACH repetitions.

5. The method according to claim 4, wherein
   a correspondence between the number of PRACH repetitions and the power adjustment amount is agreed upon by a protocol, or the correspondence between the number of PRACH repetitions and the power adjustment amount is configured by a network device.

6. The method according to claim 3, wherein determining, by the terminal device, the adjustment amount of the PUSCH transmitting power according to the number of PRACH repetitions comprised in the target PRACH repetition process comprises:

   determining, by the terminal device, a power adjustment amount related to an increment of the number of PRACH repetitions according to an increment of the number of PRACH repetitions comprised in the target PRACH repetition process compared to the number of PRACH repetitions comprised in a first PRACH repetition process; and
   determining, by the terminal device, the adjustment amount of the PUSCH transmitting power according to the power adjustment amount related to the increment of the number of PRACH repetitions.

7. The method according to claim 6, wherein
   a correspondence between the increment of the number of PRACH repetitions and the power adjustment amount is agreed upon by a protocol, or the correspondence between the increment of the number of PRACH repetitions and the power adjustment amount is configured by a network device.

8. The method according to claim 1, wherein
   in a case where the first information is the PRACH transmitting power of the PRACH repetitions, determining, by the terminal device, the PUSCH transmitting power in the random access process according to the first information comprises:

   determining, by the terminal device, the PUSCH transmitting power in the random access process according to a PRACH transmitting power in a target PRACH repetition process; or
   determining, by the terminal device, the PUSCH transmitting power in the random access process according to a lifting amount of the PRACH transmitting power in the target PRACH repetition process compared to a PRACH transmitting power in a first PRACH repetition process;
   wherein the target PRACH repetition process is one PRACH repetition process responded by a network through a RAR in at least one PRACH repetition process.

9. The method according to claim 8, wherein
   PRACH transmitting powers of different PRACH repetitions in one PRACH repetition process are the same.

10. The method according to claim 1, wherein
    in a case where the first information is the PRACH transmitting power of the PRACH repetitions, determining, by the terminal device, the PUSCH transmitting power in the random access process according to the first information comprises:

    determining, by the terminal device, the PUSCH transmitting power in the random access process according to a PRACH transmitting power of a first target PRACH transmission in a target PRACH repetition process; or
    determining, by the terminal device, the PUSCH transmitting power in the random access process according to a lifting amount of a PRACH transmitting power of a second target PRACH transmission in the target PRACH repetition process compared to a PRACH transmitting power of a third target PRACH transmission in a first PRACH repetition process;
    wherein the target PRACH repetition process is one PRACH repetition process responded by a network through a RAR in at least one PRACH repetition process.

11. The method according to claim 10, wherein the first target PRACH transmission is a first PRACH transmission or a last PRACH transmission in the target PRACH repetition process.

12. The method according to claim 10, wherein the second target PRACH transmission is a first PRACH transmission or a last PRACH transmission in the target PRACH repetition process, and the third target PRACH transmission is a first PRACH transmission or a last PRACH transmission in the first PRACH repetition process.

13. The method according to any one of claims 10 to 12, wherein
    PRACH transmitting powers of different PRACH transmissions in one PRACH repetition process are different.

14. The method according to claim 1, wherein
    in a case where the first information is the number of PRACH repetitions and the PRACH transmitting power of the PRACH repetitions, determining, by the terminal device, the PUSCH transmitting power in the random access process according to the first information comprises:

    determining, by the terminal device, the PUSCH transmitting power in the random access process according to the number of PRACH repetitions comprised in a target PRACH repetition process and a PRACH transmitting power of PRACH repetitions in the target PRACH repetition process;
    wherein the target PRACH repetition process is one PRACH repetition process responded by a network through a RAR in at least one PRACH repetition process.

15. The method according to claim 14, wherein determining, by the terminal device, the PUSCH transmitting power in the random access process according to the number of PRACH repetitions comprised in the target PRACH repetition process and the PRACH transmitting power of the PRACH repetition in the target PRACH repetition process comprises:

    determining, by the terminal device, an adjustment amount of the PUSCH transmitting power according to the number of PRACH repetitions comprised in the target PRACH repetition process and the PRACH transmitting power of the PRACH repetitions in the target PRACH repetition process; and
    determining, by the terminal device, the PUSCH transmitting power in the random access process according to the adjustment amount of the PUSCH transmitting power.

16. The method according to claim 15, wherein determining, by the terminal device, the adjustment amount of the PUSCH transmitting power according to the number of PRACH repetitions comprised in the target PRACH repetition process and the PRACH transmitting power of the PRACH repetition in the target PRACH repetition process comprises:

    determining, by the terminal device, a power adjustment amount related to the number of PRACH repetitions and the PRACH transmitting power according to the number of PRACH repetitions comprised in the target PRACH repetition process and the PRACH transmitting power of the PRACH repetition in the target PRACH repetition process; and
    determining, by the terminal device, the adjustment amount of the PUSCH transmitting power according to the power adjustment amount related to the number of PRACH repetitions and the PRACH transmitting power.

17. The method according to claim 16, wherein

a correspondence between the power adjustment amount, and the number of PRACH repetitions and the PRACH transmitting power is agreed upon by a protocol, or the correspondence between the power adjustment amount, and the number of PRACH repetitions and the PRACH transmitting power is configured by a network device.

18. The method according to claim 1, wherein
in a case where the first information is the number of times that the PRACH repetition processes are performed, determining, by the terminal device, the PUSCH transmitting power in the random access process according to the first information comprises:

    determining, by the terminal device, the PUSCH transmitting power in the random access process according to the number of times that the PRACH repetition processes are performed;
    wherein the number of times that the PRACH repetition processes are performed is determined based on a target PRACH repetition process, and the target PRACH repetition process is one PRACH repetition process responded by a network through a RAR in at least one PRACH repetition process.

19. The method according to claim 18, wherein determining, by the terminal device, the PUSCH transmitting power in the random access process according to the number of times that the PRACH repetition processes are performed comprises:

    determining, by the terminal device, an adjustment amount of the PUSCH transmitting power according to the number of times that the PRACH repetition processes are performed; and
    determining, by the terminal device, the PUSCH transmitting power in the random access process according to the adjustment amount of the PUSCH transmitting power.

20. The method according to claim 19, wherein determining, by the terminal device, the adjustment amount of the PUSCH transmitting power according to the number of times that the PRACH repetition processes are performed comprises:

    determining, by the terminal device, a power adjustment amount related to the number of times that the PRACH repetition processes are performed according to the number of times that the PRACH repetition processes are performed; and
    determining, by the terminal device, the adjustment amount of the PUSCH transmitting power according to the power adjustment amount related to the number of times that the PRACH repetition processes are performed.

21. The method according to claim 20, wherein
a correspondence between the number of times that the PRACH repetition processes are performed and the power adjustment amount is agreed upon by a protocol, or the correspondence between the number of times that the PRACH repetition processes are performed and the power adjustment amount is configured by a network device.

22. The method according to claim 1, wherein
in a case where the first information is the information indicated in the RAR, determining, by the terminal device, the PUSCH transmitting power in the random access process according to the first information comprises:

    determining, by the terminal device, the PUSCH transmitting power in the random access process according to information indicated in the RAR corresponding to a target PRACH repetition process;
    wherein the information indicated in the RAR is a parameter N, a value of N represents an N-th PRACH transmission in the target PRACH repetition process, and N is a positive integer.

23. The method according to claim 22, wherein determining, by the terminal device, the PUSCH transmitting power in the random access process according to the information indicated in the RAR corresponding to the target PRACH repetition process comprises:

    determining, by the terminal device, an adjustment amount of the PUSCH transmitting power according to the value of N; and
    determining, by the terminal device, the PUSCH transmitting power in the random access process according to the adjustment amount of the PUSCH transmitting power.

24. The method according to claim 23, wherein determining, by the terminal device, the adjustment amount of the PUSCH transmitting power according to the value of N comprises:

determining, by the terminal device, a power adjustment amount related to the number of PRACH repetitions according to the value of N; and

determining, by the terminal device, the adjustment amount of the PUSCH transmitting power according to the power adjustment amount related to the number of PRACH repetitions.

25. The method according to claim 24, wherein
a correspondence between the number of PRACH repetitions and the power adjustment amount is agreed upon by a protocol, or the correspondence between the number of PRACH repetitions and the power adjustment amount is configured by a network device.

26. The method according to claim 1, wherein
in a case where the first information is the power offset parameter related to the PRACH repetitions, determining, by the terminal device, the PUSCH transmitting power in the random access process according to the first information comprises:
determining, by the terminal device, the PUSCH transmitting power in the random access process according to the power offset parameter related to the PRACH repetitions.

27. The method according to claim 26, wherein determining, by the terminal device, the PUSCH transmitting power in the random access process according to the power offset parameter related to the PRACH repetitions comprises:

determining, by the terminal device, a power related to the PRACH repetitions according to the power offset parameter related to the PRACH repetitions; and
determining, by the terminal device, the PUSCH transmitting power in the random access process according to the power related to the PRACH repetitions.

28. A wireless communication method, comprising:

transmitting, by a network device, second information, wherein the second information is used to determine a physical uplink shared channel (PUSCH) transmitting power in a random access process;
wherein the second information is at least one of: a correspondence between the number of physical random access channel (PRACH) repetitions and a power adjustment amount, a correspondence between an increment of the number of PRACH repetitions and a power adjustment amount, a correspondence between a power adjustment amount, and the number of PRACH repetitions and a PRACH transmitting power, a correspondence between the number of times that the PRACH repetition processes are performed and a power adjustment amount, a random access response (RAR), or a power offset parameter related to the PRACH repetitions.

29. The method according to claim 28, wherein
in a case where the second information is the correspondence between the number of PRACH repetitions and the power adjustment amount, the PUSCH transmitting power in the random access process is determined based on an adjustment amount of the PUSCH transmitting power, and the adjustment amount of the PUSCH transmitting power is determined based on following information:

the correspondence between the number of PRACH repetitions and the power adjustment amount, and the number of PRACH repetitions comprised in a target PRACH repetition process;
wherein the target PRACH repetition process is one PRACH repetition process responded by a network through a RAR in at least one PRACH repetition process.

30. The method according to claim 28, wherein
in a case where the second information is the correspondence between the increment of the number of PRACH repetitions and the power adjustment amount, the PUSCH transmitting power in the random access process is determined based on an adjustment amount of the PUSCH transmitting power, and the adjustment amount of the PUSCH transmitting power is determined based on following information:

the correspondence between the increment of the number of PRACH repetitions and the power adjustment amount, and an increment of the number of PRACH repetitions comprised in a target PRACH repetition process compared to the number of PRACH repetitions comprised in a first PRACH repetition process;
wherein the target PRACH repetition process is one PRACH repetition process responded by a network through a RAR in at least one PRACH repetition process.

**31.** The method according to claim 28, wherein

in a case where the second information is the correspondence between the power adjustment amount, and the number of PRACH repetitions and the PRACH transmitting power, the PUSCH transmitting power in the random access process is determined based on an adjustment amount of the PUSCH transmitting power, and the adjustment amount of the PUSCH transmitting power is determined based on following information:

the correspondence between the power adjustment amount, and the number of PRACH repetitions and the PRACH transmitting power, and the number of PRACH repetitions comprised in a target PRACH repetition process and a PRACH transmitting power of the PRACH repetitions in the target PRACH repetition process;
wherein the target PRACH repetition process is one PRACH repetition process responded by a network through a RAR in at least one PRACH repetition process.

**32.** The method according to claim 28, wherein

in a case where the second information is the correspondence between the number of times that the PRACH repetition processes are performed and the power adjustment amount, the PUSCH transmitting power in the random access process is determined based on an adjustment amount of the PUSCH transmitting power, and the adjustment amount of the PUSCH transmitting power is determined based on following information:

the correspondence between the number of times that the PRACH repetition processes are performed and the power adjustment amount, and the number of times that the PRACH repetition processes are performed;
wherein the number of times that the PRACH repetition processes are performed is determined based on a target PRACH repetition process, and the target PRACH repetition process is one PRACH repetition process responded by a network through a RAR in at least one PRACH repetition process.

**33.** The method according to claim 28, wherein

in a case where the second information is the RAR, the PUSCH transmitting power in the random access process is determined based on an adjustment amount of the PUSCH transmitting power, and the adjustment amount of the PUSCH transmitting power is determined based on information indicated in the RAR corresponding to a target PRACH repetition process;
wherein the information indicated in the RAR is a parameter N, a value of N represents an N-th PRACH transmission in the target PRACH repetition process, and N is a positive integer.

**34.** The method according to claim 33, wherein the adjustment amount of the PUSCH transmitting power being determined based on the information indicated in the RAR corresponding to the target PRACH repetition process comprises that:
the adjustment amount of the PUSCH transmitting power is determined based on following information:
the value of N, the correspondence between the number of PRACH repetitions and the power adjustment amount.

**35.** The method according to claim 34, wherein
the correspondence between the number of PRACH repetitions and the power adjustment amount is agreed upon by a protocol, or the correspondence between the number of PRACH repetitions and the power adjustment amount is configured by the network device.

**36.** The method according to claim 28, wherein
in a case where the second information is the power offset parameter related to the PRACH repetitions, the PUSCH transmitting power in the random access process is determined based on the power offset parameter related to the PRACH repetitions.

**37.** The method according to claim 36, wherein the PUSCH transmitting power in the random access process being determined based on the power offset parameter related to the PRACH repetitions comprises that:
the PUSCH transmitting power in the random access process is determined based on a power related to the PRACH repetitions, and the power related to the PRACH repetitions is determined based on the power offset parameter related to the PRACH repetitions.

**38.** A terminal device, comprising:

a processing unit, configured to determine a physical uplink shared channel (PUSCH) transmitting power in a random access process according to first information;

wherein the first information is at least one of:

the number of physical random access channel (PRACH) repetitions, a PRACH transmitting power of the PRACH repetitions, the number of times that PRACH repetition processes are performed, information indicated in a random access response (RAR), or a power offset parameter related to the PRACH repetitions.

39. A network device, comprising:

a communication unit, configured to transmit second information, wherein the second information is used to determine a physical uplink shared channel (PUSCH) transmitting power in a random access process;

wherein the second information is at least one of: a correspondence between the number of physical random access channel (PRACH) repetitions and a power adjustment amount, a correspondence between an increment of the number of PRACH repetitions and a power adjustment amount, a correspondence between a power adjustment amount, and the number of PRACH repetitions and a PRACH transmitting power, a correspondence between the number of times that the PRACH repetition processes are performed and a power adjustment amount, a random access response (RAR), or a power offset parameter related to the PRACH repetitions.

40. A terminal device, comprising: a processor and a memory, wherein the memory is configured to store a computer program, and the processor is configured to call the computer program stored in the memory and run the computer program, to cause the terminal device to perform the method according to any one of claims 1 to 27.

41. A network device, comprising: a processor and a memory, wherein the memory is configured to store a computer program, and the processor is configured to call the computer program stored in the memory and run the computer program, to cause the network device to perform the method according to any one of claims 28 to 37.

42. A chip, comprising: a processor, configured to call a computer program from a memory and run the computer program, to cause a device equipped with the chip to perform the method according to any one of claims 1 to 27.

43. A chip, comprising: a processor, configured to call a computer program from a memory and run the computer program, to cause a device equipped with the chip to perform the method according to any one of claims 28 to 37.

44. A computer-readable storage medium, configured to store a computer program, wherein when the computer program is executed, the method according to any one of claims 1 to 27 is implemented.

45. A computer-readable storage medium, configured to store a computer program, wherein when the computer program is executed, the method according to any one of claims 28 to 37 is implemented.

46. A computer program product, comprising computer program instructions, wherein when the computer program instructions are executed, the method according to any one of claims 1 to 27 is implemented.

47. A computer program product, comprising computer program instructions, wherein when the computer program instructions are executed, the method according to any one of claims 28 to 37 is implemented.

48. A computer program, wherein when the computer program is executed, the method according to any one of claims 1 to 27 is implemented.

49. A computer program, wherein when the computer program is executed, the method according to any one of claims 28 to 37 is implemented.

**100**

FIG. 1

FIG. 2

**200**

| |
|---|
| Terminal device determines a PUSCH transmitting power in a random access process according to first information; where the first information is at least one of: the number of PRACH repetitions, the PRACH transmitting power of the PRACH repetitions, the number of times that PRACH repetition processes are performed, information indicated in an RAR, or a power offset parameter related to the PRACH repetitions |

S210

FIG. 3

FIG. 4

EP 4 580 265 A1

**300**

| Network device transmits second information, where the second information is used to determine a PUSCH transmitting power in a random access process; the second information is at least one of: a correspondence between the number of PRACH repetitions and a power adjustment amount, a correspondence between an increment of the number of PRACH repetitions and a power adjustment amount, a correspondence between a power adjustment amount, and the number of PRACH repetitions and a PRACH transmitting power, a correspondence between the number of times that the PRACH repetition processes are performed and a power adjustment amount, a RAR, or a power offset parameter related to PRACH repetitions |
| --- |

S310

FIG. 5

| Terminal device 400 |
| --- |
| Processing unit 410 |

FIG. 6

| Network device 500 |
| --- |
| Communication unit 510 |

FIG. 7

Communication device 600

Memory 620

Processor 610

Transceiver 630

FIG. 8

Apparatus 700

Input interface 730

Processor 710

Memory 720

Output interface 740

FIG. 9

Communication system 800

Terminal device — 810

Network device — 820

FIG. 10

## INTERNATIONAL SEARCH REPORT

| International application No. |
| --- |
| **PCT/CN2022/115211** |

| | |
| --- | --- |
| **A.** | **CLASSIFICATION OF SUBJECT MATTER** |
| | H04W52/04(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXTC: 功率, 随机接入, 消息1, 重传, 重复, 上行数据传输, 消息3, power, random access, RA, Prach, Preamble, msg1, RACH, repeat+, repet+, retransm+, re-transm+, msg3, PUSCH

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 113383583 A (QUALCOMM INC.) 10 September 2021 (2021-09-10) description, paragraphs 70-106 | 1-49 |
| A | CN 112868267 A (GUANGDONG OPPO MOBILE TELECOMMUNICATIONS CORP., LTD.) 28 May 2021 (2021-05-28) entire document | 1-49 |
| A | US 2020107277 A1 (COMCAST CABLE COMM L.L.C.) 02 April 2020 (2020-04-02) entire document | 1-49 |
| A | US 2022232644 A1 (QUALCOMM INC.) 21 July 2022 (2022-07-21) entire document | 1-49 |
| A | WO 2022141277 A1 (GUANGDONG OPPO MOBILE TELECOMMUNICATIONS CORP., LTD.) 07 July 2022 (2022-07-07) entire document | 1-49 |
| A | SAMSUNG. "Discussion on msg3 power determination" *3GPP TSG RAN WG1#102-e R1-2006087*, 07 August 2020 (2020-08-07), entire document | 1-49 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 April 2023** | **02 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/115211**

| Patent document cited in search report | | | Publication date (day/month/year) | Patent family member(s) | | | Publication date (day/month/year) |
|---|---|---|---|---|---|---|---|
| CN | 113383583 | A | 10 September 2021 | EP | 3918849 | A1 | 08 December 2021 |
| | | | | WO | 2020160104 | A1 | 06 August 2020 |
| | | | | US | 2020252974 | A1 | 06 August 2020 |
| | | | | US | 11350463 | B2 | 31 May 2022 |
| CN | 112868267 | A | 28 May 2021 | WO | 2020082394 | A1 | 30 April 2020 |
| | | | | US | 2021243813 | A1 | 05 August 2021 |
| | | | | EP | 3869900 | A1 | 25 August 2021 |
| | | | | EP | 3869900 | A4 | 15 December 2021 |
| US | 2020107277 | A1 | 02 April 2020 | EP | 3629638 | A1 | 01 April 2020 |
| | | | | EP | 3629638 | B1 | 14 September 2022 |
| | | | | CA | 3056971 | A1 | 27 March 2020 |
| | | | | US | 2022264479 | A1 | 18 August 2022 |
| | | | | US | 2021099963 | A1 | 01 April 2021 |
| | | | | US | 11363540 | B2 | 14 June 2022 |
| | | | | US | 10856239 | B2 | 01 December 2020 |
| | | | | EP | 4117352 | A1 | 11 January 2023 |
| US | 2022232644 | A1 | 21 July 2022 | TW | 202234943 | A | 01 September 2022 |
| | | | | WO | 2022155629 | A1 | 21 July 2022 |
| WO | 2022141277 | A1 | 07 July 2022 | None | | | |

Form PCT/ISA/210 (patent family annex) (July 2022)